# EUROPÄISCHE PATENTSCHRIFT

(11) **EP 1 285 741 B1**
(45) Veröffentlichungstag und Bekanntmachung des Hinweises auf die Patenterteilung: **21.07.2004**
(21) Anmeldenummer: 01890228.8
(22) Anmeldetag: 07.08.2001
(51) Int. Cl.: B29C 47/88, B29C 33/04

(54) **Vorrichtung zur Verwendung in einem Walzenstuhl zur Herstellung einer Kunststofffolie und Verfahren zum Wechseln eines Endlosbandes**
Apparatus for use in a calender for producing a plastic sheet and process to change an endless belt
Dispositif utilisé dans une calendre pour la fabrication d'un film en matière plastique et procédé pour changer une bande sans fin

(43) Veröffentlichungstag der Anmeldung: 26.02.2003
(73) Patentinhaber: SML Maschinengesellschaft m.b.H., 4860 Lenzing (AT)
(72) Erfinder: Becker, Rupert, 4840 Vöcklabruck (AT); Haider, Bruno, 4810 Gmunden (AT)
(74) Vertreter: Heger, Georg, Dipl.-Ing., Dr.

(56) Entgegenhaltungen:
- EP-A- 0 838 321
- WO-A-99/12722
- US-A- 5 674 442
- US-A- 6 077 065

## Beschreibung

Die Erfindung betrifft eine Vorrichtung zur Verwendung in einem Walzenstuhl zur Herstellung einer Kunststofffolie mit einem um zumindest zwei Umlenkwalzen geschlungenen Endlosband zum Anpressen der Kunststofffolie an eine Walze des Walzenstuhls und zum Abkühlen derselben, wobei die beiden Umlenkwalzen beidseitig in seitlichen Lagervorrichtungen drehbar gelagert sind. Weiters betrifft die Erfindung ein Verfahren zum Wechseln eines Endlosbandes zum Anpressen einer Kunststoffolie an eine Walze und zum Abkühlen derselben, das zumindest um zwei in seitlichen Lagervorrichtungen drehbar gelagerte Umlenkwalzen geschlungen ist.

Das Endlosband, welches in der Regel als endloses Metallband ausgeführt ist, kann neben dem Anpressen und Abkühlen der Kunststofffolie auch zur Übertragung der Oberfläche des Endlosbandes an die Kunststofffolie dienen.

Eine derartige Vorrichtung ist beispielsweise aus der US 6 077 065 A bekannt und wird insbesondere in zwei Kühlwalzen aufweisenden Glättwerken zum Anpressen der über eine Düse eingebrachten Kunststofffolie eingesetzt, da somit relativ dünne Kunststofffolien mit einer relativ glatten oder strukturierten Oberfläche auf einfache Weise hergestellt werden können. Alternativ zu dem Endlosband (auch "Sleeve-Band" genannt) werden üblicherweise Luftrakel oder auch Anspresswalzen eingesetzt. Jedoch weist das Endlosband, insbesondere bei Kunststofffolien (z.B. Polypropylen-Folien, usw.) mit einer Dicke zwischen 50 und 500 µm, Vorteile auf.

Derartige Endlosbänder, welche in der Regel aus Metall bestehen, weisen jedoch eine relativ geringe Lebensdauer auf und müssen in der Regel nach einigen Wochen auf Grund von Verschleißerscheinungen, insbesondere Rissen im Randbereich, ausgetauscht werden. Der Austausch des Endlosbandes ist jedoch aufwändig, da bei bekannten Vorrichtungen die Lagergehäuse der zur drehbaren Lagerung der Umlenkwalzen vorgesehenen Wälzlager geöffnet werden müssen. Demzufolge ergeben sich auf Grund des Bandwechsels beträchtliche Stillstandszeiten.

Ziel der vorliegenden Erfindung ist es nun, eine Vorrichtung der eingangs angeführten Art zu schaffen, bei welcher auf einfache und schnelle Weise das Endlosband ausgetauscht werden kann und somit die Stillstandszeiten des Walzenstuhls reduziert werden. Weiters solle zum selben Zweck ein Verfahren der eingangs angeführten Art geschaffen werden.

Dieses Ziel wird mit Hilfe einer Vorrichtung der eingangs angeführten Art erreicht, bei der zur Fixierung der Umlenkwalzen in einer Lagervorrichtung Befestigungsmittel vorgesehen sind und die andere Lagervorrichtung zum Austausch des Endlosbandes schwenkbar gelagert ist. Mit Hilfe einer derartigen Vorrichtung können die Umlenkwalzen somit zunächst an einer Lagervorrichtung befestigt werden, und es ist danach möglich, die andere Lagervorrichtung zum Austausch des Endlosbandes zu verschwenken, während die Umlenkwalzen mit frei auskragenden Enden in den anderen Lagervorrichtungen gehalten werden. Nach Austausch des Endlosbandes wird die zuvor verschwenkte Lagervorrichtung zurückgeschwenkt, und die Befestigungsmittel zur Fixierung der Umlenkwalzen in der anderen Lagervorrichtung werden wieder gelöst. Hierdurch ergibt sich ein gegenüber bekannten Vorrichtungen wesentlich vereinfachter Austausch des Endlosbandes. Demzufolge können die Stillstandszeiten des Walzenstuhls, in dem eine derartige Vorrichtung vorgesehen ist, wesentlich reduziert werden.

Wenn als Befestigungsmittel zur Fixierung der Umlenkwalzen jeweils ein eine Keilfläche aufweisender Fixierring vorgesehen ist, können die Umlenkwalzen durch einfaches Verschieben der Fixierringe in Richtung eines die Lager der Umlenkwalze umgebenden Lagergehäuses fixiert werden, da es zwischen der Keilfläche des Fixierrings und dem Lagergehäuse der Umlenkwalze reibschlüssigen Verbindung kommt.

Um beim Verschwenken der Lagervorrichtung nicht in Konflikt mit gegebenenfalls vorgesehenen Flüssigkeitsleitungen, die an den Umlenkwalzen beispielsweise zu deren Kühlung angeschlossen sind, zu geraten, ist es günstig, wenn die Fixierringe auf einer Anschlüsse für ein flüssiges oder gasförmiges Medium, insbesondere Kühlmedium, aufweisenden Seite der Vorrichtung vorgesehen sind.

Wenn die Lagervorrichtung um eine im Wesentlichen vertikale Drehachse schwenkbar gelagert ist, kann die Lagervorrichtung auf einfache Weise um eine in der befestigten Stellung vertikale Drehachse seitlich verschwenkt werden und somit ungehindert das Endlosband ausgetauscht werden. Insbesondere ist es hierbei günstig, wenn die Lagervorrichtung um 90° schwenkbar gelagert ist, da somit auch bei sehr breiten Endlosbändern ein ungehinderter Zugriff zu den in der anderen Lagervorrichtung befestigten Umlenkwalzen gewährleistet ist. Die Schwenkung kann jedoch auch über einen anderen Winkelbereich erfolgen.

Eine konstruktiv besonders einfache Ausgestaltung der schwenkbaren Anordnung einer Lagervorrichtung zum Austausch des Endlosbandes ist gegeben, wenn zur schwenkbaren Lagerung ein von der Lagervorrichtung nach unten ragender Zentrierbolzen vorgesehen ist, der in einer entsprechenden Öffnung in einer Aufnahmeplatte drehbar angeordnet ist.

Um die Vorrichtung modulartig an einen Walzenstuhl anschließen zu können, ist es von Vorteil, wenn die Vorrichtung auf einem mehrere Räder aufweisenden Wagen vorgesehen ist.

Wenn die schwenkbare Lagervorrichtung konische Ausnehmungen zur Aufnahme von konischen Lagergehäusen der Umlenkwalzen aufweist, können die Lagerhülsen der Walzen auf einfache Weise in die Ausnehmungen in der schwenkbaren Lagervorrichtung eingesetzt werden und zudem ergibt sich auf Grund der konischen Ausgestaltung von Ausnehmung und Lagergehäuse eine Selbstzentrierung der form- und/oder reibschlüssigen Verbindung.

Um die Spannung des Endlosbandes einstellen zu können und insbesondere die Spannung des Endlosbandes vor dem Bandwechsel zu reduzieren, ist es von Vorteil, wenn zumindest eine Umlenkwalze in den Lagervorrichtungen verstellbar angeordnet ist. Insbesondere ist es hierbei von Vorteil, wenn zur Verstellung der Walzenposition ein Pneumatik- oder Hydraulikzylinder vorgesehen ist.

Alternativ dazu kann zur Verstellung der Walzenposition auch ein Elektromotor mit Spindelgetriebe verwendet werden.

Zur genauen Ausrichtung des Endlosbandes bezüglich der Walze, an welche die herzustellende Kunststofffolie angepresst wird, ist es günstig, wenn ein die beiden Lagervorrichtungen tragendes Gestell horizontal und vertikal verstellbar angeordnet ist.

Zumindest eine der Umlenkwalzen kann durch einen Motor, beispielsweise einen Elektromotor, angetrieben sein.

Das erfindungsgemäße Verfahren der eingangs angeführten Art ist dadurch gekennzeichnet, dass die Umlenkwalzen in einer Lagervorrichtung fixiert werden, Befestigungsmittel der anderen Lagervorrichtung gelöst werden und die andere Lagervorrichtung verschwenkt wird, so dass das Endlosband seitlich von den Umlenkwalzen abgezogen werden kann.

Mit Hilfe dieses Verfahrens wird ebenso wie mit der vorstehend beschriebenen Vorrichtung die erforderliche Zeit zum Austausch eines Endlosbandes auf Grund von Verschleiß- bzw. Alterungserscheinungen wesentlich reduziert, da keine geteilten Lagergehäuseschalen demontiert werden müssen.

Um das Endlosband auf besonders einfache Weise von den beiden Umlenkwalzen entnehmen zu können und ein neues Endlosband einzusetzen, ist es günstig, wenn der Abstand der Umlenkwalzen zueinander vor dem Verschwenken der Lagervorrichtung verringert wird, da die Bandspannung des alten Bandes vor der Entnahme reduziert wird bzw. das Endlosband zum Einsetzen nicht gespannt werden muss.

Wenn die Umlenkwalzen in der Lagervorrichtung jeweils mittels eines eine Keilfläche aufweisenden Fixierringes fixiert werden, können die Umlenkwalzen auf einfache Weise mittels Verspreizung der Keilflächen zwischen der Walze und der die Walze umgebenden Lagergehäuse in einer Lagervorrichtung starr befestigt und zugleich zentriert werden.

Für eine einfache handliche Verschwenkung der Lagervorrichtung, welche in einer verschwenkten Stellung einen ungehinderten Zugriff auf die beiden fixierten Umlenkwalzen ermöglicht, ist es von Vorteil, wenn die Lagervorrichtung um eine im Wesentlichen senkrecht zu einer Aufnahmeplatte angeordnete Achse verschwenkt wird. Insbesondere ist es hierbei für einen ungehinderten Endlosband-Wechsel von Vorteil, wenn die Lagervorrichtung um 90° verschwenkt wird.

Die Erfindung wird nachstehend anhand von einem in der Zeichnung dargestellten bevorzugten Ausführungsbeispiel, auf das sie jedoch nicht beschränkt sein soll, noch weiter erläutert.

Im Einzelnen zeigen in der Zeichnung:
- Fig. 1:: eine Seitenansicht einer Vorrichtung zur Verwendung in einem Walzenstuhl mit einer verschwenkbaren Lagervorrichtung;
- Fig. 2:: eine Ansicht der Vorrichtung gemäß Fig. 1;
- Fig. 3:: einen Schnitt gemäß der Linie III-III in Fig. 1;
- Fig. 4:: eine Draufsicht der Vorrichtung gemäß Fig. 1;
- Fig. 5:: eine Draufsicht der Vorrichtung ähnlich Fig. 4, jedoch mit verschwenkter Lagervorrichtung;
- Fig. 6:: eine Detailansicht der schwenkbaren Lagerung einer Lagervorrichtung; und
- Fig. 7:: eine Ansicht der Vorrichtung in einem in einem Walzenstuhl eingebauten Zustand

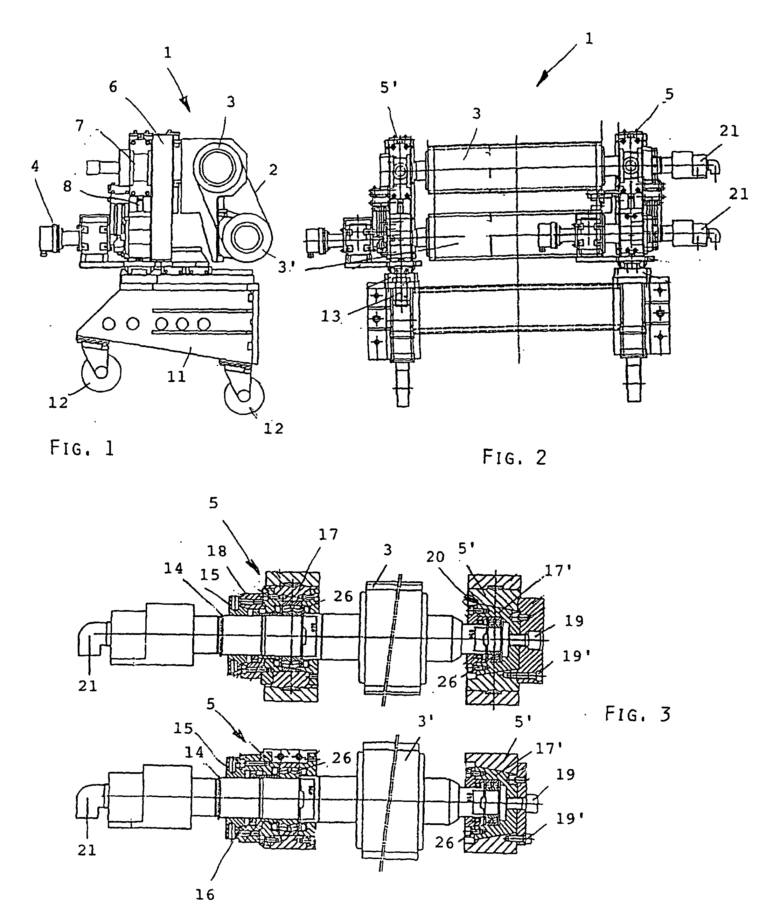

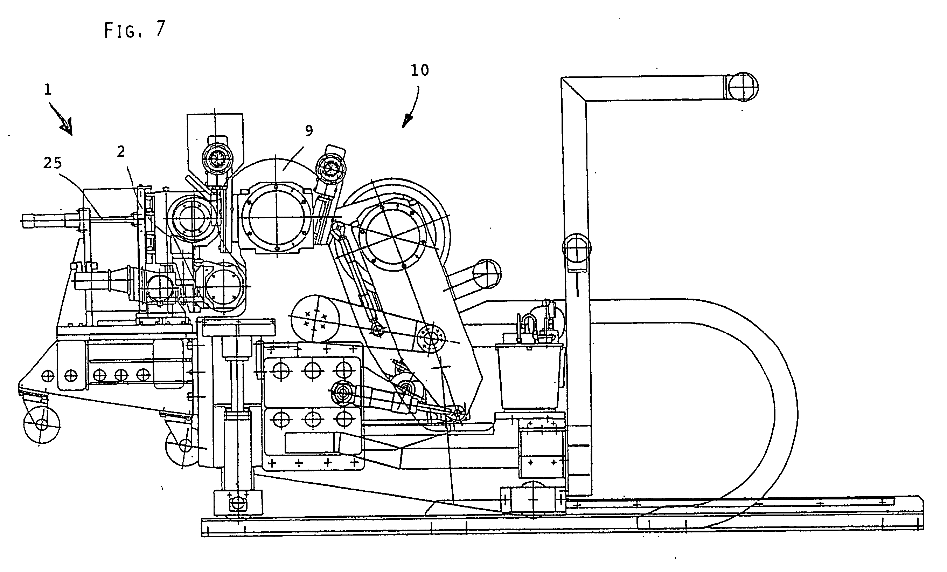

In den Figuren 1 und 2 ist eine Vorrichtung 1 gezeigt, die in einem Walzenstuhl 10 (vgl. Fig. 7) zur Herstellung von Kunststofffolien zum Anpressen der Kunststofffolie an eine Walze 9 und zum Abkühlen der Kunststofffolie verwendet wird. Insbesondere kann sie in einem Glättwerk zum Anpressen der Kunststofffolie an eine Kühlwalze und zum Abkühlen derselben verwendet werden. Hierzu ist ein Endlos- bzw. Sleeve-Band 2 vorgesehen, das um zwei Umlenkwalzen 3, 3' geschlungen ist. Die Umlenkwalzen 3, 3' können unangetrieben sein oder es kann die obere Umlenkwalze 3 oder die untere Umlenkwalze 3' über einen Motor 4 angetrieben werden. Zur Erhöhung der Produktionsgeschwindigkeit und Verbesserung der Folienqualität können jedoch auch beiden Umlenkwalzen 3, 3' von einem Motor 4 angetrieben werden. Die Umlenkwalzen 3, 3' sind beidseitig in Lagervorrichtungen 5, 5' mittels Wälzlager 26 (vgl. Fig. 3) drehbar gelagert.

Die beiden Lagervorrichtungen 5, 5' sind hierbei in einem Gestell 6 vorgesehen, das mit Hilfe von den Zylindern 7, 8 horizontal bzw. vertikal verschoben werden kann, um die gewünschte Ausrichtung des Endlosbandes 2 bezüglich der Walze 9 des Walzenstuhls 10, in dem die Vorrichtung 1 verwendet wird (vgl. Fig. 7), zu erlangen.

Um die Vorrichtung 1 modulartig an den Walzenstuhl 10 anschließen zu können, ist sie auf einem Wagen 11 mit mehreren Rollen 12 verschieblich angeordnet.

Um eine Lagervorrichtung 5 aus ihrer in Fig. 2 gezeigten, die Umlenkwalzen 3, 3' aufnehmenden Stellung in eine vorzugsweise um 90° verschwenkte Wechselstellung schwenken zu können, weist diese einen Zentrierbolzen 13 od. dgl. auf, der in einer Öffnung 27 (vgl. im Detail Fig. 6) einer Aufnahmeplatte 28 drehbar gelagert ist.

In Fig. 3 ist insbesondere ersichtlich, dass zur Fixierung der Umlenkwalzen 3, 3' jeweils ein auf einer Wellenachse 14 verschieblich gelagerter Fixierring 15 vorgesehen ist, der eine sich zu seinem freien Ende verjüngende Keilfläche 16 aufweist, wodurch er bei Verschiebung in Richtung einer mit einem Lagergehäuse 17 drehfest verbundenen Lagerhülse 18 die Wellenachse 14 bzw. die Umlenkwalzen 3, 3' mit der Lagervorrichtung 5 fest verbindet und zugleich zentriert.

Nachdem die Umlenkwalzen 3, 3' somit einseitig statisch bestimmt gelagert sind, kann die verschwenkbare Lagervorrichtung 5', nachdem Befestigungsschrauben 19 gelöst wurden, verschwenkt werden. Zur Selbstzentrierung beim Zurückschwenken der Lagervorrichtung 5' weist diese sich zu ihrer Innenseite konisch erweiternde Ausnehmungen 20 auf, welche Lagergehäuse 17', die sich zum freien Ende der Umlenkwalzen 3, 3' hin konisch verjüngen, formschlüssig aufnehmen.

Um ein ungehindertes Verschwenken der Lagervorrichtung 5' zu ermöglichen, ist diese auf der von Anschlüssen 21 für ein flüssiges oder gasförmiges Medium abgewandten Seite angeordnet.

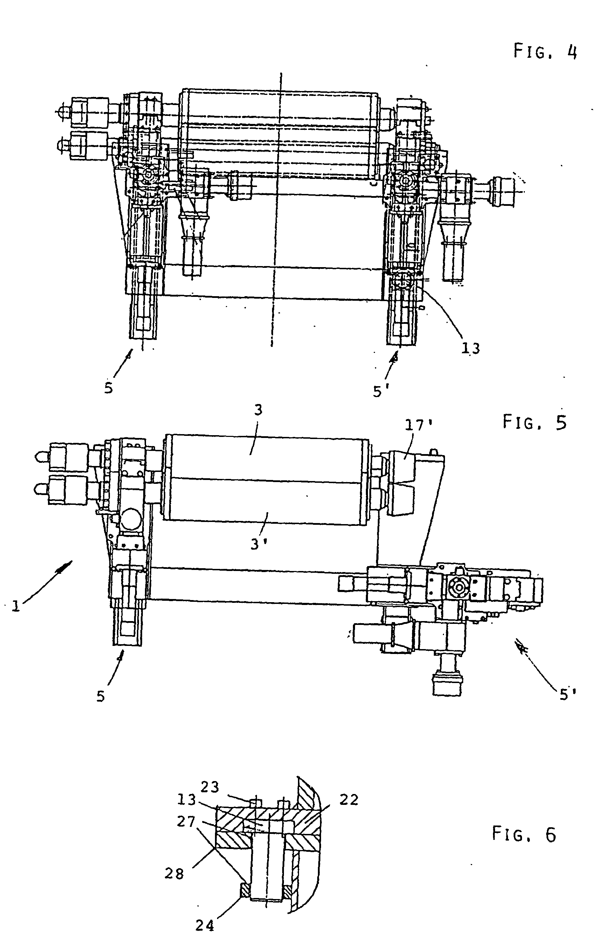

Bei der in Fig. 4 gezeigten Draufsicht ist ebenfalls der Zentrierbolzen 13 ersichtlich, um welchen die gesamte Lagervorrichtung 5' nach dem Lösen der Befestigungsschrauben 19, 19' auf einfache Weise verschwenkt werden kann, wie dies insbesondere in Fig. 5 ersichtlich ist. Nach dem Verschwenken der Lagervorrichtung 5' um 90° in die in Fig. 5 gezeigte Stellung ist ein ungehinderter Zugriff auf die in der Lagervorrichtung 5 mittels der Fixierringe 15 fixierten Umlenkwalzen 3, 3' möglich. Hierdurch kann ein auf Grund von Verschleißerscheinungen oder wegen anderer Oberflächenqualität oder Oberflächenansprüche erforderlicher Austausch des Endlosbandes 2 auf einfache Weise erfolgen.

Zum Austausch des Endlosbandes 2 ist es insbesondere günstig, wenn die Umlenkwalzen 3, 3' zuvor einander angenähert wurden, wodurch die Bandspannung des Endlosbandes 2 reduziert wird und somit ein besonders einfaches Abziehen von den Umlenkwalzen 3, 3' möglich ist. Bei dem in der Zeichnung dargestellten Ausführungsbeispiel ist demzufolge die untere Umlenkwalze 3' im Gestell 6 entlang einer Führungsschiene oder einer Gleitbahn verschiebbar gelagert.

Durch die sich zu den freien Enden hin verjüngende konische Ausgestaltung der Lagerhülsen 17' erfolgt beim Zurückschwenken der Lagervorrichtung 5' eine selbstzentrierende Ausrichtung der Umlenkwalzen 3, 3' in den Ausnehmungen 20 (vgl. Fig. 3) der Lagervorrichtungen 5'.

In Fig. 6 ist im Detail die schwenkbare Lagerung der Lagervorrichtung 5' mittels eines Zentrierbolzens 13 gezeigt, der in der Öffnung 27 einer Aufnahmeplatte 28 des Wagens 11 drehbar gelagert ist. Der Zentrierbolzen 13 ist hierbei mit einer Bodenplatte 22 der Lagervorrichtung 5' mittels Schrauben 23 drehfest verbunden. Zusätzlich ist der Zentrierbolzen 13 durch eine Öffnung in einer Führungsplatte 24 zur stabilen Drehlagerung hindurchgeführt.

In Fig. 7 ist die Verwendung einer in den Fig. 1 bis 5 gezeigten Vorrichtung 1 in einem Walzenstuhl 10 ersichtlich, wobei der Austausch des Endlosbandes 2 erfolgen kann, nachdem der Zylinder 25 in eine zurückgefahrene Position verschoben wurde und somit das Endlosband 2 von der Walze 9 beabstandet vorliegt. Eine Demontage des Wagens 11 vom Walzenstuhl 10 zum Wechsel des Endlosbandes 2 ist somit nicht erforderlich.

## Patentansprüche

1. Vorrichtung (1) zur Verwendung in einem Walzenstuhl (10) zur Herstellung einer Kunststofffolie mit einem um zumindest zwei Umlenkwalzen (3, 3') geschlungenen Endlosband (2) zum Anpressen der Kunststofffolie an eine Walze (9) des Walzenstuhls (10) und zum Abkühlen desselben, wobei die beiden Umlenkwalzen (3, 3') beidseitig in seitlichen Lagervorrichtungen (5, 5') drehbar gelagert sind, **dadurch gekennzeichnet, dass** zur Fixierung der Umlenkwalzen (3, 3') in einer Lagervorrichtung (5) Befestigungsmittel vorgesehen sind und die andere Lagervorrichtung (5') zum Austausch des Endlosbandes (2) schwenkbar gelagert ist.

2. Vorrichtung nach Anspruch 1, **dadurch gekennzeichnet, dass** als Befestigungsmittel zur Fixierung der Umlenkwalzen (3, 3') jeweils ein eine Keilfläche (16) aufweisender Fixierring (15) vorgesehen ist.

3. Vorrichtung nach Anspruch 1 oder 2, **dadurch gekennzeichnet, dass** die Fixierringe (15) auf einer Anschlüsse (21) für ein flüssiges oder gasförmiges Medium aufweisenden Seite der Vorrichtung (1) vorgesehen sind.

4. Vorrichtung nach einem der Ansprüche 1 bis 3, **dadurch gekennzeichnet, dass** die Lagervorrichtung (5') um eine im Wesentlichen vertikale Drehachse schwenkbar gelagert ist.

5. Vorrichtung nach Anspruch 4, **dadurch gekennzeichnet, dass** die Lagervorrichtung (5') um 90° schwenkbar gelagert ist.

6. Vorrichtung nach einem der Ansprüche 1 bis 5, **dadurch gekennzeichnet, dass** zur schwenkbaren Lagerung ein von der Lagervorrichtung (5') nach unten ragender Zentrierbolzen (13) vorgesehen ist, der in einer entsprechenden Öffnung (27) in einer Aufnahmeplatte (28) drehbar angeordnet ist.

7. Vorrichtung nach einem der Ansprüche 1 bis 6, **dadurch gekennzeichnet, dass** die Vorrichtung (1) auf einem mehrere Räder (12) aufweisenden Wagen (11) vorgesehen ist.

8. Vorrichtung nach einem der Ansprüche 1 bis 7, **dadurch gekennzeichnet, dass** die schwenkbare Lagervorrichtung (5') konische Ausnehmungen zur Aufnahme von konischen Lagergehäusen (17') der Umlenkwalzen (3, 3') aufweist.

9. Vorrichtung nach einem der Ansprüche 1 bis 8, **dadurch gekennzeichnet, dass** zumindest eine Umlenkwalze (3, 3') in den Lagervorrichtungen (5, 5') verstellbar angeordnet ist.

10. Vorrichtung nach Anspruch 9, **dadurch gekennzeichnet, dass** zur Verstellung der Walzenposition ein Pneumatik- oder Hydraulikzylinder vorgesehen ist.

11. Vorrichtung nach Anspruch 9, **dadurch gekennzeichnet, dass** zur Verstellung der Walzenposition ein Elektromotor mit Spindelgetriebe vorgesehen ist.

12. Vorrichtung nach einem der Ansprüche 1 bis 11, **dadurch gekennzeichnet, dass** ein die beiden Lagervorrichtungen (5) tragendes Gestell (6) horizontal und vertikal verstellbar angeordnet ist.

13. Vorrichtung nach einem der Ansprüche 1 bis 12, **dadurch gekennzeichnet, dass** zumindest eine Umlenkwalze (3, 3') durch einen Motor (4) angetrieben ist.

14. Verfahren zum Wechseln eines Endlosbandes (2) zum Anpressen einer Kunststoffolie an eine Walze (9) und zum Abkühlen derselben, das zumindest um zwei in seitlichen Lagervorrichtungen (5, 5') drehbar gelagerte Umlenkwalzen (3, 3') geschlungen ist, **dadurch gekennzeichnet, dass** die Umlenkwalzen (3, 3') in einer Lagervorrichtung (5) fixiert werden, Befestigungsmittel der anderen Lagervorrichtung (5') gelöst werden und die andere Lagervorrichtung (5') verschwenkt wird, so dass das Endlosband (2) seitlich abgezogen werden kann.

15. Verfahren nach Anspruch 14, **dadurch gekennzeichnet, dass** der Abstand der Umlenkwalzen (3, 3') zueinander vor dem Verschwenken der Lagervorrichtung (5') verringert wird.

16. Verfahren nach Anspruch 14 oder 15, **dadurch gekennzeichnet, dass** die Umlenkwalzen (3, 3') in der Lagervorrichtung (5) jeweils mittels eines eine Keilfläche (16) aufweisenden Fixierrings (15) fixiert werden.

17. Verfahren nach einem der Ansprüche 14 bis 16, **dadurch gekennzeichnet, dass** die Lagervorrichtung (5') um eine im Wesentlichen senkrecht zu einer Aufnahmeplatte (28) angeordnete Achse verschwenkt wird.

18. Verfahren nach Anspruch 17, **dadurch gekennzeichnet, dass** die Lagervorrichtung (5') um 90° verschwenkt wird.

## Claims

1. A device (1) for use in a roller frame (10) for the production of a plastic film, including a continuous belt (2) wound around at least two deflection rolls (3, 3') to press the plastic film against a roll (9) of the roller frame (10) and cool the same, said two deflection rolls (3, 3') being rotationally mounted in lateral bearing means (5, 5') on both sides, **characterized in that** fixing means are provided for fixing the deflection rolls (3, 3') in one bearing means (5), and the other bearing means (5') is pivotally mounted for an exchange of said continuous belt (2).

2. A device according to claim 1, **characterized in that** a fixing ring (15) comprising a wedged surface (16) is each provided as said fixing means for fixing said deflection rolls (3, 3').

3. A device according to claim 1 or 2, **characterized in that** the fixing rings (15) are provided on a side of the device (1), that comprises connections (21) for a liquid or gaseous medium.

4. A device according to any one of claims 1 to 3, **characterized in that** the bearing means (5') is mounted so as to be pivotable about a substantially vertical axis of rotation.

5. A device according to claim 4, **characterized in that** the bearing means (5') is mounted so as to be pivotable by 90°.

6. A device according to any one of claims 1 to 5, **characterized in that** a centering pin (13) projecting down from the bearing means (5') is provided, which is rotationally arranged in an appropriate opening (27) provided in a pick-up plate (28).

7. A device according to any one of claims 1 to 6, **characterized in that** the device (1) is arranged on a carriage (11) comprising several wheels (12).

8. A device according to any one of claims 1 to 7, **characterized in that** the pivotable bearing means (5') comprises conical recesses to receive conical bearing houses (17') of the deflection rolls (3, 3').

9. A device according to any one of claims 1 to 8, **characterized in that** at least one deflection roll (3, 3') is adjustably arranged in the bearing means (5, 5').

10. A device according to claim 9, **characterized in that** a pneumatic or hydraulic cylinder is provided for adjusting the position of the rolls.

11. A device according to claim 9, **characterized in that** an electromotor including a spindle gear is provided for adjusting the position of the rolls.

12. A device according to any one of claims 1 to 11, **characterized in that** a support (6) carrying the two bearing means (5) is arranged in a horizontally and vertically adjustable manner.

13. A device according to any one of claims 1 to 12, **characterized in that** at least one deflection roll (3, 3') is driven by a motor (4).

14. A method for exchanging a continuous belt (2) used to press a plastic film against a roll (9) and cool the same, which is wound around at least two deflection rolls (3, 3') rotationally mounted in lateral bearing means (5, 5'), **characterized in that** the deflection rolls (3, 3') are fixed in one bearing means (5), fixing means of the other bearing means (5') are released, and the other bearing means (5') is pivoted in a manner that the continuous belt (2) can be drawn off laterally.

15. A method according to claim 14, **characterized in that** the distance of the deflection rolls (3, 3') relative to each other is reduced prior to pivoting the bearing means (5').

16. A method according to claim 14 or 15, **characterized in that** the deflection rolls (3, 3') are each fixed in the bearing means (5) by a fixing ring (15) comprising a wedged surface (16).

17. A method according to any one of claims 14 to 16, **characterized in that** the bearing means (5') is pivoted about an axis arranged substantially vertical relative to a pick-up plate (28).

18. A method according to claim 17, **characterized in that** the bearing means (5') is pivoted by 90°.

## Revendications

1. Dispositif (1) utilisé dans une calandre (10) pour la fabrication d'une feuille de plastique, comprenant une bande sans fin (2) formant une boucle autour d'au moins deux cylindres de déviation (3, 3') de manière à presser la feuille de plastique contre un cylindre (9) de la calandre (10) et à la refroidir, les deux cylindres de déviation (3, 3') étant montés rotatifs des deux côtés dans des dispositifs de stockage latéraux (5, 5'), **caractérisé en ce que** des moyens de fixation sont prévus pour fixer les cylindres de déviation (3, 3') dans un dispositif de stockage (5), tandis que l'autre dispositif de stockage (5') est monté pivotant de manière à pouvoir changer la bande sans fin (2).

2. Dispositif, selon la revendication 1, **caractérisé en ce que** le moyen de fixation permettant de fixer les cylindres de déviation (3, 3') consiste à chaque fois en une bague de fixation (15) présentant une surface à coin (16).

3. Dispositif, selon la revendication 1 ou 2, **caractérisé en ce que** les bagues de fixation (15) sont disposées sur un côté du dispositif (1) présentant des raccords (21) pour un milieu liquide ou gazeux.

4. Dispositif, selon l'une des revendications 1 à 3, **caractérisé en ce que** le dispositif de stockage (5') est monté pivotant sur un axe de rotation essentiellement vertical.

5. Dispositif, selon la revendication 4, **caractérisé en ce que** le dispositif de stockage (5') est monté de manière à pouvoir pivoter sur 90°.

6. Dispositif, selon l'une des revendications 1 à 5, **caractérisé en ce que**, pour effectuer un stockage par pivotement, on utilise un boulon de centrage (13) dépassant vers le bas depuis le dispositif de stockage (5'), lequel boulon est monté en rotation dans une ouverture correspondante (27) formée dans une plaque de retenue (28).

7. Dispositif, selon l'une des revendications 1 à 6, **caractérisé en ce que** le dispositif (1) est disposé sur un chariot (11) comportant plusieurs roues (12).

8. Dispositif, selon l'une des revendications 1 à 7, **caractérisé en ce que** le dispositif de stockage pivotant (5') comprend des renfoncements coniques permettant de retenir des boîtiers de stockage coniques (17') des cylindres de déviation (3, 3').

9. Dispositif, selon l'une des revendications 1 à 8, **caractérisé en ce qu'**au moins un cylindre de déviation (3, 3') est disposé de manière réglable dans les dispositifs de stockage (5, 5').

10. Dispositif, selon la revendication 9, **caractérisé en ce que** l'on utilise un vérin pneumatique ou hydraulique pour régler la position des cylindres.

11. Dispositif, selon la revendication 9, **caractérisé en ce que** l'on utilise un moteur électrique avec une transmission à vis pour régler la position des cylindres.

12. Dispositif, selon l'une des revendications 1 à 11, **caractérisé en ce qu'**un cadre (6) supportant les deux dispositifs de stockage (5) est monté de manière à pouvoir être réglé horizontalement et verticalement.

13. Dispositif, selon l'une des revendications 1 à 12, **caractérisé en ce qu'**au moins un cylindre de déviation (3, 3') est entraîné par un moteur (4).

14. Procédé permettant de changer une bande sans fin (2) pour presser une feuille de plastique contre un cylindre (9) et pour la refroidir, laquelle forme une boucle autour d'au moins deux cylindres de déviation (3, 3') montés rotatifs dans des dispositifs de stockage latéraux (5, 5'), **caractérisé en ce que** les cylindres de déviation (3, 3') sont fixés dans un dispositif de stockage (5), **en ce que** les moyens de fixation de l'autre dispositif de stockage (5') sont relâchés et **en ce que** l'autre dispositif de stockage (5') est pivoté de sorte que la bande sans fin (2) puisse être retirée latéralement.

15. Procédé, selon la revendication 14, **caractérisé en ce que** la distance entre les cylindres de déviation (3, 3') est réduite avant le pivotement du dispositif de stockage (5').

16. Procédé, selon la revendication 14 ou 15, **caractérisé en ce que** les cylindres de déviation (3, 3') sont chaque fois fixés dans le dispositif de stockage (5) par le biais d'une bague de fixation (15) présentant une surface à coin (16).

17. Procédé, selon l'une des revendications 14 à 16, **caractérisé en ce que** le dispositif de stockage (5') pivote autour d'un axe essentiellement perpendiculaire à une plaque de retenue (28).

18. Procédé, selon la revendication 17, **caractérisé en ce que** le dispositif de stockage (5') pivote à 90°.
